(19) **Europäisches Patentamt**
**European Patent Office**
**Office européen des brevets**

(11) **EP 2 402 296 A1**

(12) **EUROPEAN PATENT APPLICATION**
published in accordance with Art. 153(4) EPC

(43) Date of publication:
**04.01.2012 Bulletin 2012/01**

(51) Int Cl.:
**C04B 35/46** (2006.01)　　**C04B 35/64** (2006.01)

(21) Application number: **10746228.5**

(22) Date of filing: **24.02.2010**

(86) International application number:
**PCT/JP2010/052867**

(87) International publication number:
**WO 2010/098348 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **25.02.2009 JP 2009042845**

(71) Applicant: **Sumitomo Chemical Company, Limited Tokyo 104-8260 (JP)**

(72) Inventors:
• **TOHMA, Tetsuro**
**Niihama-shi**
**Ehime 792-0002 (JP)**

• **UOE, Kousuke**
**Niihama-shi**
**Ehime 792-0025 (JP)**
• **YOSHINO, Hajime**
**Niihama-shi**
**Ehime 792-0009 (JP)**

(74) Representative: **Berryman, Natalia Grace**
**Vossius & Partner**
**Sieberstr. 4**
**81675 München (DE)**

(54) **METHOD FOR PRODUCING ALUMINUM TITANATE CERAMIC SINTERED BODY, AND ALUMINUM TITANATE CERAMIC SINTERED BODY**

(57) The invention is to provide a process for producing an aluminum titanate-based ceramics capable of realizing low thermal expansion and high mechanical strength and having little dimensional change in firing, at a low firing temperature of lower than 1500°C. The invention is a process for producing an aluminum titanate-based ceramics fired body comprising a step of shaping a ceramic plastic rammed earth containing a precursor mixture and an organic-based binder into a predetermined shape, wherein the starting material mixture containing a titanium source powder, an aluminum source powder and a silicon source powder, and a step of maintaining the shaped ceramics plastic rammed earth within a temperature range of from 900 to 1350°C at a temperature change per hour of from -50 to +50°C/hr for 3 hours or more, followed by heating up to a temperature of 1400°C or higher and firing at the temperature. And the invention is an aluminum titanate-based ceramics fired body that is obtained by the said invention and having a porosity of from 30 to 60%.

EP 2 402 296 A1

**Description**

TECHNICAL FIELD

The present invention relates to a process for producing an aluminum titanate-based ceramics fired body, and relates to an aluminum titanate-based ceramics fired body.

BACKGROUND ART

An exhaust gas filter for diesel engines is a filter for filtering and collecting soot and others contained in exhaust gas, and is generally formed of a ceramics fired body having a high porosity. When the filter formed of a porous ceramics has trapped a predetermined amount of soot, the gas flow resistance therethrough increases, therefore regeneration treatment of burning the clogging soot on the filter is carried out. In this case, the temperature rapidly increases inside the filter and the filter is exposed to high temperature and receives great thermal shock. Accordingly, it is required that the exhaust gas filter material for diesel engines is highly resistant to thermal shock and its characteristic degradation owing to thermal fatigue is small.

Aluminum titanate ($Al_2TiO_5$) is known as a ceramics having a high melting point and exhibiting low thermal expansion, and is specifically noted as an exhaust gas filter material. However, aluminum titanate generally has a low mechanical strength, and its thermal stability is poor at around 900 to 1100°C or so close to the service temperature range of filters (as decomposing into $TiO_2$ and $Al_2O_3$). There have been made various attempts of adding various types of additive elements to ordinary aluminum titanate to thereby improve the mechanical strength and the thermal stability with maintaining the low thermal expansion thereof.

As the process for producing an aluminum titanate-based ceramics fired body such as aluminum titanate or aluminum magnesium titanate, a process of producing an aluminum titanate-based ceramic fired body having a small coefficient of thermal expansion is required. For producing aluminum magnesium titanate having a small coefficient of thermal expansion, a precursor mixture may be fired at a higher temperature, for example at a temperature of 1500°C or higher. However, in industrial-scale operation, the firing temperature is preferably lower.

CITATION LIST

PATENT REFERENCES

Patent Reference 1: Japanese Patent 3612943
Patent Reference 2: JP-A 11-060240

SUMMARY OF THE INVENTION

PROBLEMS THAT THE INVENTION IS TO SOLVE

For realizing low thermal expansion of aluminum titanate, heat treatment at high temperature is indispensable. However, it is known that heat treatment at high temperature worsens the mechanical strength of aluminum titanate. As a production process for porous aluminum titanate, Patent Reference 1 proposes a process of directly shaping a starting material powder of titanium oxide, aluminum oxide, silicon oxide and others along with an organic binder to give a porous body in one-time heat treatment. Patent Reference 2 proposes a process for producing a porous fired body from a powder of aluminum titanate. Firing the shaped body at high temperature obtained by these processes can realize low thermal expansion, however, the volume change thereof owing to firing shrinkage is great and the mechanical strength also greatly lowers.

Accordingly, the present inventors have assiduously studied for developing a process for producing an aluminum titanate-based ceramics fired body capable of realizing low thermal expansion and high mechanical strength and having little dimensional change in firing, at a low firing temperature of lower than 1500°C, and as a result, have reached the present invention.

MEANS FOR SOLVING THE PROBLEMS

That is, the process for producing an aluminum titanate-based ceramics fired body in the invention comprises a step of shaping a ceramic plastic rammed earth containing a precursor mixture and an organic-based binder into a predetermined shape, wherein the starting material mixture contains a titanium source powder, an aluminum source powder and a silicon source powder, and

a step of maintaining the shaped ceramic plastic rammed earth within a temperature range of from 900 to 1350°C at a temperature change per hour of from -50 to +50°C/hr for 3 hours or more, followed by heating up to a temperature of 1400°C or higher and firing at the temperature. In this description, "the aluminum titanate-based ceramics fired body" obtained in the process of the invention comprises a composite material comprising aluminum titanate and aluminosilicate.

In the invention, the silicon source powder is preferably an amorphous aluminosilicate having a melting point of from 800 to 1350°C, and more preferably from 1000 to 1200°C. The aluminosilicate is preferably a glass having a deformation point of from 700 to 1000°C.

The precursor mixture in the invention preferably further contains a magnesium source powder.

In the invention, the $SiO_2$-equivalent amount of the silicon source powder to be used is preferably from 2 to 10% by weight ratio relative to the oxide-equivalent amount of the precursor mixture powder to be used, and the silicon source powder is preferably an amorphous aluminosilicate where the oxide-equivalent weight ratio is: $SiO_2$ = 70 to 80%, $Al_2O_3$ = 5 to 15%, $(Na_2O + K_2O)$ = 5 to 25%, MgO = 0 to 3.0%, and as an inevitable component $(CaO+SrO+BaO)$ < 4.0%. The weight ratio of the silicon source is more preferably from 2 to 4%.

The invention also provides an aluminum titanate-based ceramics fired body produced by any one of processes described above, and having a porosity of from 30 to 60%.

In the aluminum titanate-based ceramics fired body of the invention, the silicon source powders is preferably an amorphous aluminosilicate having a melting point of from 800 to 1350°C, more preferably from 1000 to 1200°C. The aluminosilicate is preferably a glass having a deformation point of from 700 to 1000°C.

In the production of the aluminum titanate-based ceramics fired body of the invention, the precursor mixture preferably further contains a magnesium source powder.

In the aluminum titanate-based ceramics fired body of the invention, it is also preferable that the $SiO_2$-equivalent amount of the silicon source powder to be used is from 2 to 10% by weight ratio relative to the oxide-equivalent amount of the precursor mixture to be used, and the silicon source powder is an amorphous aluminosilicate where the oxide-equivalent weight ratio is: $SiO_2$ = 70 to 80%, $Al_2O_3$ = 5 to 15%, $(Na_2O + K_2O)$ = 5 to 25%, MgO = 0 to 3.0%, and as an inevitable component $(CaO + SrO + BaO)$ < 4.0%. The weight ratio of the silicon source powder is preferably from 2 to 4%.

In this description, an $Al_2O_3$ (alumina) -equivalent weight $X_1$ of the aluminum source powder is calculated by the following formula (A).

$$X_1 = N_{10} \times x_{10} \qquad (A)$$

In the formula (A), $N_{10}$ represents the formula weight of $Al_2O_3$, and $X_{10}$ represents the $Al_2O_3$(alumina)-equivalent molar amount of the aluminum source powder. The $Al_2O_3$(alumina)-equivalent molar amount $x_{10}$ of the aluminum source powder is calculated by the following formula (A-1).

$$x_{10} = (w_1 \times M_1)/(N_1 \times 2) \qquad (A-1)$$

In the formula (A-1), $w_1$ represents an amount (g) of the aluminum source powder to be used; $M_1$ represents the molar amount of aluminum in 1 mol of the aluminum source powder; $N_1$ represents the formula weight of the aluminum source powder to be used. In the invention, when two or more types of aluminum source powders are used, the $Al_2O_3$(alumina)-equivalent molar amount of each aluminum source powder is calculated by the formula (A-1), and each molar amount are summed up to give the $Al_2O_3$(alumina)-equivalent molar amount of the aluminum source powders to be used.

A $TiO_2$(titania)-equivalent weight $x_2$ of the titanium source powder is calculated by the following formula (B).

$$X_2 = N_{20} \times x_{20} \qquad (B)$$

In the formula (B), $N_{20}$ represents the formula weight of $TiO_2$, and $x_{20}$ represents the $TiO_2$ (titania) -equivalent molar amount of the titanium source powder. The $TiO_2$(titania)-equivalent molar amount $x_{20}$ of the titanium source powder is calculated by the following formula (B-1).

$$X_{20} = (w_2 \times M_2)/N_2 \qquad (B-1)$$

In the formula (B-1), $w_2$ represents an amount (g) of the titanium source powder to be used; $M_2$ represents the molar amount of titanium in 1 mol of the titanium source powder; $N_2$ represents the formula weight of the titanium source powder to be used. In the invention, when two or more types of titanium source powders are used, the $TiO_2$(titania)-equivalent molar amount of each titanium source powder is calculated by the formula (B-1), and each molar amount are summed up to give the $TiO_2$(titania)-equivalent molar amount of the titanium source powders to be used.

A MgO(magnesia)-equivalent weight $x_3$ of the magnesium source powder is calculated by the following formula (C).

$$X_3 = N_{30} \times x_{30} \qquad (C)$$

In the formula (C), $N_{30}$ represents the formula weight of MgO, and $x_{30}$ represents the MgO(magnesia)-equivalent molar amount of the magnesium source powder. The MgO(magnesia)-equivalent molar amount $x_{30}$ of the magnesium source powder is calculated by the following formula (C-1).

$$X_{30} = (w_3 \times M_3)/N_3 \qquad (C-1)$$

In the formula (C-1), $w_3$ represents an amount (g) of the magnesium source powder to be used; $M_3$ represents the molar amount of magnesium in 1 mol of the magnesium source powder; $N_3$ represents the formula weight of the magnesium source powder to be used. In the invention, when two or more types of titanium source powders are used, the MgO (magnesia)-equivalent molar amount of each magnesium source powder is calculated by the formula (C-1), and each molar amount are summed up to give the MgO (magnesia) -equivalent molar amount of the magnesium source powders to be used.

A $SiO_2$ (silica) -equivalent weight $x_4$ of the silicon source powder is calculated by the following formula (D).

$$X_4 = N_{40} \times x_{40} \qquad (D)$$

In the formula (D), $N_{40}$ represents the formula weight of $SiO_2$, and $x_{40}$ represents the $SiO_2$ (silica)-equivalent molar amount of the silicon source powder. The $SiO_2$ (silica) -equivalent molar amount $x_{40}$ of the silicon source powder is calculated by the following formula (D-1).

$$X_{40} = (w_4 \times M_4)/N_4 \qquad (D-1)$$

In the formula (D-1), $w_4$ represents an amount (g) of the silicon source powder to be used; $M_4$ represents the molar amount of silicon in 1 mol of the silicon source powder; $N_4$ represents the formula weight of the silicon source powder to be used. In the invention, when two or more types of silicon source powders are used, the $SiO_2$ (silica) -equivalent molar amount of each silicon source powder is calculated by the formula (D-1), and each molar amount are summed up to give the $SiO_2$(silica)-equivalent molar amount of the silicon source powders to be used.

When an aluminosilicate is used as the silicon source powder, $SiO_2$(silica)-equivalent weight $X_4'$ is calculated by the following formula (D').

$$X_4' = R(AS) \times W(AS)$$

In the formula (D'), R(AS) represents the weight ratio (weight %) of $SiO_2$ in the aluminosilicate, W(AS) represents the weight (g) of the aluminosilicate to be used. R(AS) can be measured by the method such as fluorescent X-ray analysis method (XRF) or ICP emission spectrometry.

ADVANTAGE OF THE INVENTION

By the invention, an aluminum titanate-based ceramics fired body having a small coefficient of thermal expansion and excellent in mechanical strength and heat-resistant stability can be produced at a temperature of lower than 1500°C.

MODE FOR CARRYING OUT THE INVENTION

In the production process for an aluminum titanate-based ceramics fired body of the invention, first, a ceramic plastic rammed earth that contains a precursor mixture and an organic binder is shaped into a predetermined shape, wherein the precursor mixture contains a titanium source powder, an aluminum source powder and a silicon source powder.

The titanium source powder to constitute the precursor mixture indicates a powder of a material capable of being a titanium ingredient to constitute an aluminum titanate-based ceramics. The titanium source powder includes, for example, titanium(IV) oxide, titanium(III) oxide, titanium(II) oxide, and titanium(IV) oxide is preferably used. The titanium(IV) oxide may be crystalline or amorphous. When the titanium (IV) oxide is crystalline, the crystal form thereof includes an anatase form, a rutile form, and a brookite form.

As the titanium source powder, a powder of a material capable of being led to titania (titanium oxide) by firing in air is also included. The material includes, for example, titanium salt, titanium alkoxide, titanium hydroxide, titanium nitride, titanium sulfide, and titanium metal. The titanium salt particularly includes titanium trichloride, titanium tetrachloride, titanium(IV) sulfide, titanium(VI) sulfide, and titanium(IV) sulfate. The titanium alkoxide particularly includes titanium (IV) ethoxide, titanium(IV) methoxide, titanium(IV) tert-butoxide, titanium(IV) isobutoxide, titanium(IV) n-propoxide, titanium(IV) tetraisopropoxide, and their chelate compounds.

As the titanium source powder in the invention, anatase form or rutile form titanium(IV) oxide that is inexpensive and industrially available with ease is preferred.

The aluminum source powder to constitute the precursor mixture includes, for example, a powder of alumina (aluminum oxide). The alumina may be crystalline or amorphous. When the alumina is crystalline, the crystal form thereof includes a $\gamma$ form, a $\delta$ form, a $\theta$ form, and an $\alpha$ form. As the aluminum source powder, an $\alpha$ form alumina is preferred.

As the aluminum source powder, a powder of a material capable of being led to alumina by firing in air is also included. The material includes, for example, aluminum salt, aluminum alkoxide, aluminum hydroxide, and aluminum metal. The aluminum salt may be an inorganic salt or an organic salt. The inorganic salt particularly includes, for example, nitrates such as aluminum nitrate, ammonium aluminum nitrate; and carbonates such as ammonium aluminum carbonate. The organic salt includes, for example, aluminum oxalate, aluminum acetate, aluminum stearate, aluminum lactate, and aluminum laurate. The aluminum alkoxide concretely includes, for example, aluminum isopropoxide, aluminum ethoxide, aluminum sec-butoxide, and aluminum tert-butoxide. The aluminum hydroxide may be crystalline or amorphous. When the aluminum hydroxide is crystalline, the crystal form thereof includes, for example, a gibbsite form, a bayerite form, a norstrandite form, a boehmite form, and a pseudo-boehmite form. Amorphous aluminum hydroxide includes, for example, an aluminum hydrolyzate to be obtained by hydrolysis of an aqueous solution of a water-soluble aluminum compound such as aluminum salt or aluminum alkoxide.

As the aluminum source powder, a powder of alumina that is inexpensive and industrially available with ease is preferred, and $\alpha$ form alumina is more preferred.

Regarding the amount to be used of the titanium source powder and the aluminum source powder, in general, the titania ($TiO_2$)-equivalent amount of the titanium source powder to be used is preferably from 35 to 55 parts by weight, more preferably from 40 to 50 parts by weight, and the alumina ($Al_2O_3$)-equivalent amount of the aluminum source powder to be used is preferably from 45 to 65 parts by weight, more preferably from 50 to 60 parts by mass, each per 100 parts by weight of the total of the titania-equivalent amount of the titanium source powder to be used and the alumina-equivalent amount of the aluminum source powder to be used.

The silicon source powder to constitute the precursor mixture may be a material that will become $SiO_2$ or a Si-containing composite oxide by firing in air, and includes, for example, a silicon oxide powder such as silicon dioxide, or silicon monoxide, and the like. As the silicon source powder to be used in the invention, a powder of an aluminosilicate that is amorphous and has a melting point of from 800 to 1350°C is preferred, and a silicon source powder not containing a crystalline compound such as, for example, silicon dioxide or silicon monoxide is more preferred.

As the silicon source powder, a powder of a material serving as an aluminum source is also usable. The material includes, for example, feld spar and glass frit.

In the invention, for the purpose of improving the mechanical strength and the heat-resistant stability of the aluminum titanate-based ceramics fired body, use of a powder of an aluminosilicate that is amorphous and has a melting point of from 800 to 1350°C as the silicon source powder is preferred. The melting point of the aluminosilicate is preferably from 900 to 1100°C, and it is especially preferred that the aluminosilicate is aluminosilicate glass having a deformation point of from 700°C to 1000°C. In the invention, the melting point of aluminosilicate is a temperature at which an endothermic peak is observed in differential thermal analysis (DTA), and the deformation point is a temperature at which a folding point of the thermal expansion curve appears in the measurement of thermal expansion curve of the aluminosilicate.

When an aluminosilicate having a melting point of lower than 800°C is used, the heat-resistant stability of aluminum titanate greatly lowers. When an aluminosilicate having a melting point of higher than 1350°C or an aluminosilicate with crystalline silica remaining therein is used, the effect of improving the heat-resistant stability and the thermal shock resistance may tend to lower.

The $SiO_2$-equivalent amount of the silicon source powder to be used is preferably from 2 to 10% by weight ratio, more preferably from 2 to 4%, relative to the oxide-equivalent amount of the precursor mixture to be used (that is, the total of the $TiO_2$-equivalent amount of the titanium source powder to be used, the $Al_2O_3$-equivalent amount of the aluminum source powder to be used, the $SiO_2$-equivalent amount of the silicon source powder to be used, and optionally the MgO-equivalent amount of the magnesium source powder to be used). When the $SiO_2$-equivalent amount of the silicon source powder is less than 2%, then the heat-resistant stability and the mechanical strength of the aluminum titanate-based ceramics may be low, and when more than 10%, the deformation in firing may be large and a homogeneous aluminum titanate-based ceramics fired body could not be obtained and, in addition, the coefficient of thermal expansion of the ceramics tend to increase.

Preferably, the silicon source powder for use in the invention is an amorphous aluminosilicate in which the oxide-equivalent weight ratio is: $SiO_2$ = 70 to 80%, $Al_2O_3$ = 5 to 15%, $(Na_2O + K_2O)$ = 5 to 25%, MgO = 0 to 3.0%, $(CaO + SrO + BaO) < 4.0\%$. Using the silicon source powder like this makes it possible to obtain an aluminum titanate-based ceramics excellent in heat-resistant stability and mechanical strength.

As a silicon-containing oxide having the same composition, natural minerals such as alkali feldspar is included, but this is a mixture that comprises multiple oxides including crystalline silica and the like. The melting point and the deformation point of the natural minerals are generally higher than the temperature range defined in the invention, and when they are used as a starting material, there may be a possibility that the crystalline silica would remain in the grain boundary of the aluminum titanate-based ceramics. Crystalline silica may cause phase transformation accompanied by great volume change at low temperature like cristobalite, and this worsens the strength characteristics of the aluminum titanate-based ceramics. Accordingly, use of natural minerals such as alkali feldspar as the silicon source is unfavorable. The amount of crystalline silica that may be contained in the silicon source powder is preferably 0.1% or less by weight relative to aluminum titanate.

In the above-mentioned aluminosilicate, when the ratio by weight of $SiO_2$ is less than 70%, then the heat-resistant stability may tend to lower, and when more than 80%, then crystalline silica may tend to precipitate. The ratio by weight of $SiO_2$ in the above-mentioned aluminosilicate is more preferably from 70 to 75%.

In the above-mentioned aluminosilicate, when $Al_2O_3$ is less than 5% and/or $Na_2O + K_2O$ is more than 25%, then the chemical stability of the silicon-containing phase may tend to lower, and when $Al_2O_3$ is more than 15% and/or $Na_2O + K_2O$ is less than 5%, then crystalline silica and a silicon-containing crystalline compound having a melting point of 1350°C or higher (for example, mullite, etc.) may tend to precipitate. Preferably, the ratio by weight of $Al_2O_3$ in the above-mentioned aluminosilicate is from 7 to 12%, and the ratio by weight of $Na_2O + K_2O$ is from 10 to 20%, and more preferably, the ratio by weight of $Na_2O$ and $K_2O$ is from 0.10 to 0.60 as $Na_2O/(Na_2O + K_2O)$.

The above-mentioned aluminosilicate may contain inevitable components within a range not changing the melting point and the viscous behavior of glass. The inevitable impurities include Li, B, F, Mg, P, Ca, Ti, Cr, Mn, Fe, Co, Ni, Cu, Zn, Ga, Sr, Y, Zr, Nb, Sn, Ba, La, Ta, Ce, Pb, Bi, and preferably, the total amount of these impurities is 5% or less in terms of the oxide-equivalent amount thereof (regarding F and P, in terms of their pure substances). In particular, Mg, Ca, Sr and Ba greatly change the characteristics of glass, and therefore, in terms of the oxide-equivalent amount thereof, MgO is preferably 3.0% or less, $(CaO + SrO + BaO)$ is preferably less than 4.0%, and $(CaO + SrO + BaO)$ is more preferably 3% or less.

The precursor mixture in the invention may contain starting material powders of magnesium (Mg) and iron (Fe), and preferably further contains a magnesium source powder, apart from the titanium source, the aluminum source and the silicon source, for the purpose of improving the heat-resistant stability of aluminum titanate and for lowering the firing temperature. The magnesium source powder is a powder of a material that will become a magnesium ingredient of constituting aluminium magnesium titanate $(Al_{2(1-x)}Mg_xTi_{1+x}O_5)$, and, for example, a powder of magnesia (magnesium oxide) is included. Aluminum magnesium titanate is a solid solution of aluminum titanate and magnesium titanate. In this description, the "aluminum titanate-based ceramics fired body" obtained by the process of the invention includes a composite material comprising aluminum magnesium titanate and aluminosilicate.

As the magnesium source powder, a material to be led to magnesia by firing in air is also included. The material includes, for example, magnesium salt, magnesium alkoxide, magnesium hydroxide, magnesium nitride, and metal magnesium. The magnesium salt particularly includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate. The magnesium alkoxide particularly includes magnesium methoxide, and magnesium ethoxide.

As the magnesium source powder, a material serving both as a magnesium source and as an aluminum source, and a material serving both as a magnesium source and as a titanium source can also be used. The material like these include, for example, magnesia spinel ($MgAl_2O_4$), magnesium titanate ($MgTiO_3$, $Mg_2TiO_5$), and in particular, magnesia spinel is preferred as the magnesium source powder in the invention as inexpensive and industrially available with ease.

Further, the composition of the aluminum titanate-based ceramics in the invention preferably satisfies a compositional formula to express the aluminum titanate-based ceramics, $Al_{2(1-x)}Mg_xTi_{(1+x)}O_5$-$aAl_2O_3$, in which x is from 0.05 to 0.30 and a is from 0.0 to 0.3, especially preferably x is from 0.10 to 0.25 and a is from 0.0 to 0.3.

The precursor mixture in the invention may contain additive powders except titanium, aluminum, magnesium and silicon within a range not detracting from the advantage of the invention. The additives include, for example, Li, B, F, P, Ca, Cr, Mn, Fe, Co, Ni, Cu, Zn, Ga, Sr, Y, Zr, Nb, Sn, Ba, La, Ta, Ce, Pb, Bi, and preferably, the total amount of these additives is 3% or less in terms of the oxide-equivalent amount thereof (regarding F and P, in terms of their pure substances).

The precursor mixture can be obtained, for example, by mixing a titanium source powder, an aluminum source powder and a silicon source powder, or by mixing a titanium source powder, an aluminum source powder, a silicon source powder and a magnesium source powder. The mixing may be carried out in any of a dry mixing method or a wet mixing method. A method in which a metal element-containing materials can be mixed uniformly is preferred. A method of mixing the starting material powder with grinding them in a grinding container along with grinding media may also be used. In this case, the mixing apparatus includes, for example, a ball mill, a V-shaped mixer, a vibration mill, an attritor, a Dyno mill, and a dynamic mill.

Of the above-mentioned mixing methods, the method of simultaneously mixing and grinding the precursor powders with a vibration mill is preferably used because of easiness of industrial operation. The mixing may be carried out by continuous process, or may be carried out by batch process, but preferably carried out by continuous process from the viewpoint of easiness of industrial operation.

As the grinding container, one formed of a metal material such as stainless steel is generally used, and its inner surface maybe coated with a fluororesin, a silicone resin, an urethane resin and the like.

As the grinding media, for example, alumina beads, zirconia beads and the like having a particle diamter of from 1 mm to 100 mm, preferably from 5 mm to 50 mm are included. Alumina beads is preferably used from the viewpoint of preventing contamination with impurities.

In grinding, additives such as a dispersant, a grinding aid or a flocculant may be added. The grinding aid includes, for example, alcohols such as monools (methanol, ethanol, propanol, and the like), or glycols (propylene glycol, polypropylene glycol, ethylene glycol, and the like); amines such as triethanolamine; higher fatty acids such as palmitic acid, stearic acid, or oleic acid; and carbon materials such as carbon black, or graphite. These may be used singly or in combination with two or more types.

When the additives are used, the total amount thereof to be used may be generally from 0.1 to 10 parts by mass, preferably from 0.5 to 5 parts by mass, more preferably from 0.75 to 2 parts by mass, per 100 parts by mass of the total amount of the starting material powders to be used (that is, the titanium source powder, the aluminum source powder, the silicon source powder and the magnesium source powder).

When the additives are used, the additives may be removed from the precursor mixture after mixed. Regarding the removal of the additives, for example, when additives capable of being burnt away by heating in air are used, they may be burnt away by heating in air. The heating temperature in this case is generally 500°C or lower.

In that manner, a precursor mixture containing a titanium source powder, an aluminum source powder and a silicon source powder (or a titanium source powder, an aluminum source powder, a magnesium source powder and a silicon source powder) is obtained, and the precursor mixture is led to aluminum titanate (or aluminum magnesium titanate) by firing.

In the invention, a ceramic plastic rammed earth containing the above-mentioned precursor mixture and an organic binder is shaped into a predetermined shape. As the organic binder for use in the invention, any suitable conventional known organic binder may be used with no limitation, including, for example, celluloses such as methyl cellulose, carboxymethyl cellulose, or sodium carboxymethyl cellulose; alcohols such as polyvinyl alcohol; salts such as lignin sulfonate; waxes such as paraffin wax, or microcrystalline wax; and thermoplastic resins such as EVA, polyethylene, polystyrene, liquid-crystal polymer, or engineering plastics.

In producing the ceramic plastic rammed earth in the invention, combustible organic ingredients such as a pore-forming agent, a lubricant, the above-mentioned dispersant, grinding aid, or flocculant may be added. The combustible organic ingredients are organic ingredients that burn by heating at a predetermined temperature in a combustible atmosphere. The pore-forming agent includes, for example, carbon materials such as graphite; resins such as polyethylene, polypropylene, or polymethyl methacrylate; vegetable materials such as starch, nutshell, walnut-shell, or corn; ice, and dry ice.

The amount of the combustible organic ingredients including an organic binder to be incorporated is not specifically limited, and preferably from 1 to 50 parts by weight, more preferably from 5 to 40 parts by weight, relative to 100 parts by weight of the precursor mixture. When the amount of the combustible organic ingredients is less than 1 part by weight relative to 100 parts by weight of the precursor mixture, then the proportion of the combustible organic ingredients is small and therefore the deformation or the strain in the firing step may be relatively small, and when more than 50 parts by weight, then the amount of heat generation in firing the combustible organic ingredients may tend to increase.

The combustible organic ingredients may be added in mixing to prepare the precursor mixture, or the combustible ingredients may be added thereto after the mixing and further separately mixed, however, simultaneous mixing is preferred from the viewpoint of the production efficiency.

When the additives are used, the total amount thereof to be used may be generally from 0.1 to 10 parts by weight, preferably from 0.5 to 5 parts by weight, more preferably from 0.75 to 2 parts by weight, per 100 parts by weight of the total amount of the starting materials to be used, or that is, the total amount to be used of the titanium source powder, the aluminum source powder and the silicon source powder (or the titanium source powder, the aluminum source powder, the magnesium source powder and the silicon source powder).

When the additives are used, the additives may be removed from the precursor mixture after mixed. Regarding the removal of the additives, for example, when additives capable of being burnt away by heating in air are used, they may be burnt away by heating in air. The heating temperature in this case is generally 700°C or lower.

In that manner, the precursor mixture for use in the invention is obtained, and the precursor mixture is led to an aluminum titanate-based compound by firing.

The above-mentioned pore-forming agent, lubricant, dispersant, grinding aid, flocculant, organic binder and the like are added to the precursor mixture for use in the invention to prepare a shaping material, and the shaping material is mixed and kneaded to prepare a ceramic plastic rammed earth, which is then shaped into a predetermined shape. As the apparatus for forming the plastic rammed earth, for example, a combined apparatus of a kneader and an extruder, and a continuous kneading extruder can be included.

The above-mentioned precursor mixture is shaped into a predetermined shape. In this, the predetermined shape includes, for example, a honeycomb shape, a pellet shape, and a tabular shape, and above all, a honeycomb shape is preferred because of the reason that its geometrical surface area is large. The cross-section profile of the honeycomb shape includes a circle, an oval, a square and a triangle, and the whole configuration of the honeycomb shape includes a cylinder, an angular tube.

The shaping method includes, for example, extrusion, casting, injection shaping and the like. For example, in extrusion shaping for a honeycomb shaped body, an extrudable plastic body prepared by mixing and kneading is shaped through extrusion into a honeycomb shape. As the method of extrusion shaping, any known method can be used.

In the subsequent step, the shaped ceramic plastic rammed earth is maintained within a temperature range of from 900 to 1350°C at a temperature change per hour of from -50 to +50°C/hr for 3 hours or more, preferably 4 hours or more, then heated up to a temperature of 1400°C or higher, and fired at the temperature to give an aluminum titanate-based ceramics fired body. In the invention, for example, the temperature change per hour of 50°C/hr means that the temperature change when maintained for 3 hours within a temperature range of from 900 to 1350°C is 150°C. So far as the temperature change falls within the above-mentioned range while maintained within a temperature range of from 900 to 1350°C, not overstepping the temperature range, the precursor mixture may be maintained at a constant temperature or the heating rate may be changed as needed, or heating or cooling may be alternately repeated. When the precursor mixture is maintained within a temperature range of from 900 to 1350°C, preferably, it is maintained at a temperature change of 0°C/hr for 3 hours or more.

Within the above-mentioned temperature range, the mixture is maintained at a temperature change per hour of from -50 to +50°C/hr for 3 hours or more, then heated up to a temperature of not lower than 1400°C but generally lower than 1600°C, and fired at the temperature to give the intended aluminum titanate-based ceramics fired body. The time to be taken for the heat treatment may a time enough for transition of the precursor powder into an aluminum titanate-based ceramics fired body, and in general, the time is from 10 minutes to 24 hours, preferably from 3 hours to less than 12 hours though varying depending on the type of the starting material powders, and the heat treatment condition.

In the production process for the aluminum titanate-based ceramics fired body of the invention, when aluminosilicate is used as the silicon source and when the precursor mixture is maintained within the above-mentioned temperature range of from 900 to 1350°C at a temperature change per hour of from -50 to +50°C/hr for 3 hours or more, then the aluminosilicate as the silicon source contained in the precursor powders melts and the aluminosilicate melt liquid uniformly penetrates into the precursor powders through the capillary phenomenon. Owing to this phenomenon, the starting material powders aggregate thereby coming to go along more uniform and more efficient reaction to form aluminum titanate, and in addition, every one of the crystal particles in the aluminum titanate-based ceramics obtained by the above-mentioned process become coated with the aluminosilicate layer. The present inventors have found that the aluminosilicate coating layer prevents both the occurrence of thermal decomposition of aluminum titanate and the expansion of the decomposition reaction thereof, and have completed the present invention.

When the precursor powder is maintained at a temperature of 900°C or lower, or that is, lower than the above-mentioned temperature range of from 900 to 1350°C, the aluminosilicate contained in the precursor mixture does not melt, or even though melted, the resulting melt liquid does not have a sufficiently low viscosity enough to penetrate between particles, and therefore the aluminosilicate distribution in the aluminum titanate-based ceramics could be inhomogeneous. On the other hand, when the precursor powder is maintained at a temperature of 1350°C or higher, the reaction to form aluminum titanate occurs simultaneously with the melting of aluminosilicate. Accordingly, even when the precursor powder is maintained at a temperature falling outside the temperature range of from 900 to 1350°C, aluminosilicate could not be uniformly distributed in the obtained aluminum titanate-based ceramics and, in addition, the aluminum titanate particles could not be coated with the aluminosilicate layer so that the heat-resistant stability thereof may lower and the strength of the obtained aluminum titanate-based ceramics fired body may lower.

In the above-mentioned production process for the aluminum titanate-based ceramics fired body, the precursor powder is maintained within a temperature range of from 900 to 1350°C, and then fired at 1400°C or higher to thereby form aluminum titanate from the precursor powder. In this case, the inventors confirmed that, when the heat treatment temperature is 1500°C or higher and when magnesium is contained in the precursor powder, then the magnesium melts out into the glass layer to change the composition of the aluminum titanate phase, and therefore the desired characteristics may not be obtained. Accordingly, the heat treatment temperature of 1400°C or higher is preferably not lower than 1400°C and lower than 1500°C, more preferably not lower than 1430°C and not higher than 1470°C.

When heated up to the above-mentioned temperature range and maintained within the range, the atmosphere is generally air, but depending on the type or the blend ratio of the starting material powders (that is, the titanium source powder, the aluminum source powder, the magnesium source powder and the silicon source powder), firing may be carried out in an inert gas such as nitrogen gas or argon gas, or may be carried out in a reducing gas such as carbon monoxide gas or hydrogen gas. Firing may also be carried out in an atmosphere where the water vapor partial pressure is reduced.

In general, the firing is carried out using an ordinary firing furnace such as a tubular electric furnace, a boxy electric furnace, a tunnel furnace, a far-IR furnace, a microwave heating furnace, a shaft furnace, a reverberating furnace, a rotary furnace, or a roller hearth furnace.

In that manner, a fired body of an aluminum titanate-based ceramics such as aluminum titanate or aluminum magnesium titanate can be obtained. The invention also provides the aluminum titanate-based ceramics fired body. That is, the aluminum titanate-based ceramics fired body of the invention is an aluminum titanate-based ceramics fired body to be obtained by the production process that comprises a step of shaping a ceramic plastic rammed earth containing a precursor mixture, which contains a titanium source powder, an aluminum source powder and a silicon source powder, and an organic binder, into a predetermined shape, and a step of maintaining the shaped ceramic plastic rammed earth within a temperature range of from 900 to 1350°C at a temperature change per hour of from -50 to +50°C/hr for 3 hours or more, then heating it up to a temperature of 1400°C or higher and firing it at the temperature, and the fired body has a porosity of from 30 to 60%, preferably from 40 to 60%. When the porosity of the aluminum titanate-based ceramics fired body is less than 30%, then the pressure loss through the body tends to increase for use for exhaust gas purification filters for internal combustion engines or for use for catalyst carriers, and when the porosity is more than 60%, then the mechanical strength of the fired body may lower and therefore the fired body would be unsuitable for use for filters or catalyst carriers. The porosity of the aluminum titanate-based ceramics fired body may be determined according to the Archimedes method by dipping in water, and calculated according to the method of JIS R1634.

The aluminum titanate-based ceramics fired body of the invention is excellent in strength and heat-resistant stability and has a low coefficient of thermal expansion. The strength in the invention is the three-point bending strength measured according to the method of JIS R1601 using a ceramics strength tester. The heat-resistant stability means the residual ratio of the aluminum titanate crystal phase after maintaining the aluminum titanate-based ceramics fired body within a temperature range of from 900 to 1100°C for a predetermined period of time. The excellence in heat-resistant stability means that the thermal decomposition ratio determined as follows is 1.0% or less. The fired body is maintained at 1100°C for 48 hours in a boxy electric furnace to prepare a sample for thermal decomposition evaluation, and the constitutive phases of the obtained sample for thermal decomposition evaluation is analyzed through powdery X-ray diffractometry [XRD], and the thermal decomposition ratio is calculated from the integrated intensity $I[TiO_2]$ of the peak appearing at the position of $2\theta = 27.4°$ [assigned to the titania-rutile phase (110) face] and the integrated intensity $I[AT]$ of the peak appearing at the position of $2\theta = 33.7°$ [assigned to the aluminum titanate phase (230) face] according to the formula (1).

$$\text{Thermal Decomposition Ratio (\%)} = 100 - 100 \times$$

$$I[AT]/(I[AT] + I[TiO_2]) \cdots (1)$$

The thermal expansion ratio as referred to herein is the thermal expansion coefficient ($K^{-1}$) determined as follows. For example, the aluminum titanate-based ceramics fired body is cut into a prismatic column of $4 \times 4 \times 12$ mm in size, and using a thermomechanical analyzer (SII Technology's TMA6300), the test piece is heated from room temperature up to 1000°C at 600°C/hr, and then the thermal expansion coefficient ($K^{-1}$) thereof is determined. Materials having a lower coefficient of thermal expansion are excellent in thermal shock resistance, and the coefficient of thermal expansion measured by the above-mentioned measurement method is preferably $2.0 \times 10^{-6}$ $K^{-1}$ or less, more preferably $1.8 \times 10^{-6}$ $K^{-1}$ or less.

For the same reason as above, the silicon source in the precursor mixture of the aluminum titanate-based ceramics fired body of the invention is preferably an aluminosilicate that is amorphous and has a melting point of from 900 to 1350°C.

Also for the same reason as above, preferably, the precursor mixture of the aluminum titanate-based ceramics fired body of the invention further contains a magnesium source powder and the fired body is a fired body of aluminum magnesium titanate.

Also for the same reason as above, in the precursor mixture of the aluminum titanate-based ceramics fired body of the invention, the ratio by weight of the $SiO_2$-equivalent amount of the silicon source powder to the oxide-equivalent amount of the precursor mixture is preferably from 2 to 10%, and preferably, the silicon source powder is an amorphous aluminosilicate in which the oxide-equivalent weight ratio is: $SiO_2$ = 70 to 80%, $Al_2O_3$ = 5 to 15%, ($Na_2O$ + $K_2O$) = 5 to 25%, $MgO$ = 0 to 3.0%, ($CaO$ + $SrO$ + $BaO$) < 4.0%.

EXAMPLES

The invention is described in more detail with reference to the following Examples, however, the invention should not be limited to these experimental examples.

(Example 1)

Particles of aluminum oxide (Sumitomo Chemical's AT-50) were used as an aluminum source powder in an amount of 47.3% by mass; particles of titanium oxide (DuPont's R-900) were as a titanium source powder in an amount of 41.0% by mass; powder of magnesia spinel (by Saint-Gobain) was as a magnesium source powder in an amount of 6.2% by mass; and particles of glass frit ($SiO_2$ = 75.2%, $Al_2O_3$ = 9.2%, $Na_2O$ = 3.0%, $K_2O$ = 7.3%, $CaO$ = 2.6%, $MgO$ = 2.7%) were as a silicon source powder in an amount of 5.6% by mass. The melting point of the glass frit used was 948°C, and the deformation point thereof was 768°C. Relative to 100 parts by mass of the precursor mixture powder, added were 10 parts by mass of polyethylene particles ($d_{50}$ = 23 $\mu$m) as a pore-forming agent, 7.5 parts by mass of methyl cellulose as a binder, 9.3 parts by mass of polyoxyalkylene alkyl ether as a surfactant, and 0.8 parts by mass of glycerin as a lubricant to prepare a shaping material, and further, 38 parts by mass of water as a dispersant was added thereto, and kneaded in a kneader to prepare a ceramic plastic rammed earth. The ceramic plastic rammed earth was extrusion-shaped to produce a honeycomb shaped body. The honeycomb shaped body was dried with a drier at 100°C for 12 hours, and then, after the degreasing step of removing the binder from it in an air atmosphere at 400°C in a boxy electric furnace, this was heated at 300°C/hr and maintained at 1250°C for 5 hours, then further heated up to 1450°C at 300°C/hr and fired at 1450°C for 5 hours to give a honeycomb fired body.

As a result of analysis of the powder of the honeycomb fired body produced in Example 1 through powdery X-ray diffractometry, the AT conversion ratio of the ceramics powder was 100%. As the crystal phase constituting the powder, only aluminum magnesium titanate ($Al_{1.84}Mg_{0.08}Ti_{1.08}O_5$) and alumina ($Al_2O_3$) were confirmed (represented by a compositional formula, $Al_{1.84}Mg0.08Ti_{1.08}O_5$-$0.16Al_2O_3$), and a diffraction peak indicating a crystal phase of $SiO_2$ or Si-containing oxide could not be confirmed. After heat treatment at 1100°C for 48 hours, the AT conversion ratio was still 100% (the decomposition ratio thereof was 0%), it was confirmed that the powder indicated excellent heat-resistant stability.

The porosity of the obtained honeycomb body measured by the Archimedes method was 42%, and the dimensional change after drying and after firing was 10%. The coefficient of thermal expansion of the honeycomb fired body was $1.6 \times 10^{-6}$ $K^{-1}$.

The mode and Examples for carrying out the invention disclosed at this time are exemplification in all aspects, and those should be considered unlimitedly. The scope of the invention is indicated not by the above-mentioned description but by the claims, and is intended to comprise all variations in the meaning and in the range of claims-equivalent.

INDUSTRIAL APPLICABILITY

The aluminum titanate-based ceramics fired body of the invention exhibits low thermal expansion and has high heat-resistant stability and excellent mechanical strength, and can favorably be used, for example, for filters for use for exhaust gas purification in internal combustion engines such as diesel engines, and for honeycombs for catalyst carriers and the like.

**Claims**

1.   A process for producing an aluminum titanate-based ceramics fired body, comprising a step of shaping a ceramic plastic rammed earth containing a precursor mixture and an organic-based binder into a predetermined shape, wherein the starting material mixture contains a titanium source powder, an aluminum source powder and a silicon source powder, and
a step of maintaining the shaped ceramics plastic rammed earth within a temperature range of from 900 to 1350°C at a temperature change per hour of from -50 to +50°C/hr for 3 hours or more, followed by heating up to a temperature of 1400°C or higher and firing at the temperature.

2.   The process according to claim 1, wherein the silicon source powder is an amorphous aluminosilicate having a melting point of from 800 to 1350°C.

3.   The process according to claim 2, wherein the aluminosilicate is a glass having a deformation point of from 700 to 1000°C.

4.   The process according to any of claims 1 to 3, wherein the precursor mixture further contains a magnesium source powder.

5.   The process according to any of claims 1 to 4, wherein the $SiO_2$-equiva amount of the silicon source powder to be used is from 2 to 10% by weight ratio relative to the oxide-equivalent amount of the precursor mixture powder to be used, and the silicon source powder is an amorphous aluminosilicate where the oxide-equivalent weight ratio is: $SiO_2$ = 70 to 80%, $Al_2O_3$ = 5 to 15%, ($Na_2O$ + $K_2O$) = 5 to 25%, MgO = 0 to 3.0%, (CaO + SrO + BaO) < 4.0%.

6.   An aluminum titanate-based ceramics fired body produced by the process according to any one of claims 1 to 5, having a porosity of from 30 to 60%.

7.   The aluminum titanate-based ceramics fired body according to claim 6, wherein the silicon source powder is an amorphous aluminosilicate having a melting point of from 800 to 1350°C.

8.   The aluminum titanate-based ceramics fired body according to claim 7, wherein the aluminosilicate is a glass having a deformation point of from 700 to 1000°C.

9.   The aluminum titanate-based ceramics fired body according to any of claims 6 to 8, wherein the precursor mixture further contains a magnesium source powder.

10. The aluminum titanate-based ceramics fired body according to any of claims 6 to 9, wherein the $SiO_2$-equivalent amount of the silicon source powder to be used is from 2 to 10% by weight ratio relative to the oxide-equivalent amount of the precursor mixture powder to be used, and the silicon source powder is an amorphous aluminosilicate where the oxide-equivalent weight ratio is: $SiO_2$ = 70 to 80%, $Al_2O_3$ = 5 to 15%, ($Na_2O$ + $K_2O$) = 5 to 25%, MgO = 0 to 3.0%, (CaO + SrO + BaO) < 4.0%.

**INTERNATIONAL SEARCH REPORT**

| | International application No. |
|---|---|
| | PCT/JP2010/052867 |

A.   CLASSIFICATION OF SUBJECT MATTER
*C04B35/46(2006.01)i, C04B35/64(2006.01)i*

According to International Patent Classification (IPC) or to both national classification and IPC

B.   FIELDS SEARCHED

Minimum documentation searched (classification system followed by classification symbols)
C04B35/46-35/478, C04B35/64-35/65, C04B35/10-35/119

Documentation searched other than minimum documentation to the extent that such documents are included in the fields searched
Jitsuyo Shinan Koho         1922–1996   Jitsuyo Shinan Toroku Koho   1996–2010
Kokai Jitsuyo Shinan Koho   1971–2010   Toroku Jitsuyo Shinan Koho   1994–2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | JP 2008-545612 A  (Corning Inc.),<br>18 December 2008 (18.12.2008),<br>claims 1 to 52; paragraphs [0002] to [0005],<br>[0028], [0032], [0036] to [0068]; fig. 1, 3,<br>7 to 9<br>& US 2007/0006561 A1     & WO 2006/130759 A2 | 1,2,6,7<br>3-5,8-10 |
| Y | JP 6-305828 A  (Kawasaki Rozai Kabushiki Kaisha),<br>01 November 1994 (01.11.1994),<br>claims 1 to 6; paragraphs [0006] to [0010]<br>(Family: none) | 3,5,8,10 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 March, 2010 (12.03.10) | Date of mailing of the international search report<br>06 April, 2010 (06.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/052867 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2006/006667 A1 (NGK Insulators, Ltd.), 19 January 2006 (19.01.2006), claims 1 to 10; paragraphs [0001] to [0010], [0039], [0042] to [0048], [0058], [0067] to [0076] & US 2008/0029938 A1 | 4,9 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3612943 B

- JP 11060240 A